# EUROPEAN PATENT SPECIFICATION

(11) **EP 0 698 636 B1**
(45) Date of publication and mention of the grant of the patent: **12.09.2001**
(21) Application number: 95112677.0
(22) Date of filing: 11.08.1995
(51) Int. Cl.: C08K 3/02, C08J 3/22, C08L 23/06

(54) **Flame-retardant materials**
Flammhemmende Materialien
Matériaux retardateurs aux flammes

(30) Priority: 26.08.1994 GB 9417234
(43) Date of publication of application: 28.02.1996
(73) Proprietor: Clariant Finance (BVI) Limited, Road Town, Tortola (VG)
(72) Inventor: Agunloye, Francis 'Femi, Newport, Shropshire TF10 7LD (GB); Chilles, Colin Andrew, Walsall, West Midlands WS4 2DN (GB); Davidson, Paul, Coventry, West Midlands CV2 4DR (GB); Whelan, Declan Noel, Stafford, Staffordshire ST17 9JX (GB)
(74) Representative: Dancaux, Xenia-Tamara

(56) References cited:
- EP-A- 0 255 901
- EP-A- 0 438 188
- EP-A- 0 541 367
- EP-A- 0 607 812
- DATABASE WPI Section Ch, Week 9329 Derwent Publications Ltd., London, GB; Class A13, AN 93-232513 & JP-A-05 156 117 ( ASAHI CHEM IND CO LTD) , 22 June 1993

## Description

This invention relates to flame-retardant materials and in particular to coloured plastics materials having flame-retardant properties.

Plastics materials, especially thermoplastic plastics materials, are frequently used in applications such as moulded seating components, e.g. for seating in vehicles, stadia, theatres and the like. Thus, it is imperative that such seating be made flame-retardant.

In the event of a fire, many of the hitherto-used plastics materials have been found to exacerbate the fire either by their inherent flammability or, if not inherently flammable, by the evolution of toxic gases under the influence of both direct and radiant heat.

Whilst it is well-known in the art to use red phosphorus either on its own or in conjunction with other additives as an effective flame-retardant, it has been recognised that there are significant deficiencies associated with said use, for example, the characteristically dull appearance of red phosphorus, and its possible adverse reactions with other colouring agents.

We have now found that it is possible to incorporate colouring agents into thermoplastic plastics materials without impairing the flame-retardant effect of red phosphorus or having the available range of colours of the product restricted by the masking effect of the colour of the red phosphorus.

Accordingly, the present invention provides a coloured plastics material having flame-retardant properties, characterised in that said plastics material including an additive comprising (a) a masterbatch containing red phosphorus and (b) a masterbatch containing one or more colouring agents, and in that said plastics material consists essentially of one or more polyolefins selected from the group consisting of high density polyethylene and polypropylene.

Preferably, the additive may comprise from 1 to 20% by weight of the masterbatch containing red phosphorus and from 0.5 to 20% by weight of the masterbatch containing one or more colouring agents.

The present application further provides a fabricated article comprising a flame-retardant plastics material as described hereinabove.

The colour of the flame-retardant plastics material may be, for example, bright red, brown, black, blue or dark blue.

Colours described herein are classified with reference to the RAL CHART standard, a German Standard: Farbregister Verkehrssarben.

Suitably, the additive may comprise from 8 to 24% by weight of the masterbatch containing red phosphorus and from 1 to 12% by weight of the masterbatch containing one or more colouring agents.

Typically, the additive may comprise 14% by weight of a masterbatch containing red phosphorus and 8% by weight of the masterbatch containing one or more colouring agents.

Preferably, the plastics material may consist essentially of high density polyethylene (HDPE).

Alternatively, the plastics material may consist essentially of polypropylene.

The materials made according to the present invention may be adapted to be fabricated by means of a blow-moulding, compression moulding, injection-moulding or extrusion process,

Fabricated articles made according to the present invention may include components for seating and panelling, e.g. for surface tops and the like. The invention will be illustrated by way of the following examples:

### EXAMPLES 1 TO 5

Examples 1 to 5 are formulations for flame-retardant materials imparting various hues to High Density Polyethylene (HDPE). Percentages given in the TABLE below represent the amounts of colour and of red amorphous phosphorus (by weight of the total formulation).

**TABLE 1**

| | **EXAMPLES** | | | | |
|---|---|---|---|---|---|
| | **1** | **2** | **3** | **4** | **5** |
| Colour | Bright Red | Brown | Black | Blue | Dark Blue |
| RAL CHART REF | 2002 | 8912 | 9004 | 5010 | 5011 |

| **Component** | **% Composition** | | | | |
|---|---|---|---|---|---|
| HDPE | 72.25 | 83.625 | 82.125 | 74.25 | 77.25 (a) |
| AMGARD CPC 105 | 14.0 | 14.0 | 14.0 | 14.0 | 14.0 (b) |
| COLOUR (1) | - | 0.5 | 2.0 | - | - (c) |
| COLOUR (2) | 10.0 | - | - | - | - (d) |
| U V Stabilizer (1) | - | 1.875 | 1.875 | - | 3.75 (e) |
| U V Stabilizer (2) | 3.75 | - | - | 3.75 | - (f) |
| COLOUR (3) | - | - | - | 10.0 | - (g) |
| COLOUR (4) | - | - | - | - | 5.0 (h) |

| | | | | | |
|---|---|---|---|---|---|
| (a) High density polyethylene, supplied by Atochem as **LACQTENE*** 2003SN53. | | | | | |
| (b) A masterbatch of 50% red amorphous phosphorus in polyethylene, available from Albright & Wilson Ltd., as **AMGARD*** CPC105. | | | | | |
| (c) A masterbatch of 50% carbon black in polyethylene supplied by Wilson Colour Ltd., as 103-BK-50. | | | | | |
| (d) A masterbatch of 50% iron oxide and azo-condensed red in polyethylene supplied by Wilson Colour Ltd., as BLP 586K-0908. | | | | | |
| (e) A masterbatch of TINUVIN* 327 and 770 in polyethylene supplied by Additive Colours, as PE UV 156. | | | | | |
| (f) A masterbatch of TINUVIN* 327 AND 770 in polypropylene supplied by Additive Colours, as PP UV 129. | | | | | |
| (g) A masterbatch of 50% phthalocyanine blue in polyethylene supplied by Wilson Colour Ltd., as 525-K-0514. | | | | | |
| (h) A masterbatch of 50% phthalocyanine blue and carbon black in polyethylene supplied by Wilson Colour Ltd., as 859-BV-50. ***LACQTENE, AMGARD,** and **TINUVIN** are Registered Trade Marks. TINUVIN U/V stabilisers are available from Ciba-Giegy Ltd. | | | | | |

The formulations were prepared as follows:

High density polyethylene (HDPE) (a) and red amorphous phosphorus in polyethylene (b) together with one or more of components (c), (d), (e), (f), (g) and (h) [see above] were dry-blended in a high-speed blender prior to compounding in a twin-screw compounder.

The compounder was maintained at 190°C for all zones and run at 150 r.p.m.

The product was then blow-moulded into seat backs and bases. These were then fitted to a metal frame for testing.

The flammability of the moulded articles was then assessed in accordance with BS5852 PART 5 : 1990 : Crib Standard Test No. 5, the results of which are given in TABLE 2 below:

**TABLE 2**

| | No. 5 Crib |
|---|---|
| Example 1 | Pass* |
| Example 2 | Pass |
| Example 3 | Pass |
| Example 4 | Pass |
| Example 5 | Pass |

| | |
|---|---|
| *"Pass" indicates that the burning plastics material self-extinguished within 10 minutes. | |

## Claims

1. A coloured plastics material having flame-retardant properties, **characterised in that** said plastics material includes an additive comprising (a) a masterbatch containing red phosphorus and (b) a masterbatch containing one or more colouring agents, **and in that** said plastics material consists essentially of one or more polyolefins, selected from the group consisting of high density polyethylene and polypropylene.

2. A material according to Claim 1, **characterised in that** the additive comprises from 1 to 20% by weight of the masterbatch containing red phosphorus and from 0.5 to 20% by weight of the masterbatch containing one or more colouring agents.

3. A material according to Claim 1, **characterised in that** the additive comprises from 8 to 24% by weight of the masterbatch containing red phosphorus and from 1 to 12% by weight of the masterbatch containing one or more colouring agents.

4. A material according to Claim 1, 2 or 3, **characterised in that** the additive comprises 14% by weight of the masterbatch containing red phosphorus and 8% by weight *of the masterbatch containing* one or more colouring agents.

5. A material according to any one of the preceding claims, **characterised in that** the plastics material consists essentially of high density polyethylene (HDPE).

6. A material according to any one of Claims 1 to 4, **characterised in that** the plastics material consists essentially of polypropylene.

## Patentansprüche

1. Ein gefärbtes Kunststoffmaterial mit flammenhemmenden Eigenschaften, **dadurch gekennzeichnet, dass** dieses Kunststoffmaterial einen Zusatzstoff enthält, welcher a) einen Masterbatch, enthaltend einen roten Phosphor und b) einen Masterbatch, enthaltend einen oder mehrere Färbemittel, umfasst und dieses Kunststoffmaterial im Wesentlichen aus einem oder mehreren Polyolefinen, ausgewählt aus der Gruppe, bestehend aus Hochdruckpolyethylen und Polypropylen, besteht.

2. Ein Material gemäss Patentanspruch 1, **dadurch gekennzeichnet, dass** der Zusatzstoff von 1 bis 20 Gew.-% des Masterbatches, welcher den roten Phosphor enthält, und von 0,5 bis 20 Gew.-% des Masterbatches, welcher ein oder mehrere Färbemittel enthält, umfasst.

3. Ein Material gemäss Patentanspruch 1, **dadurch gekennzeichnet, dass** der Zusatzstoff von 8 bis 24 Gew.-% des Masterbatches, welcher den roten Phosphor enthält, und von 1 bis 12 Gew.-% des Masterbatches, welcher ein oder mehrere Färbemittel enthält, umfasst.

4. Ein Material gemäss Patentanspruch 1, 2 oder 3, **dadurch gekennzeichnet, dass** der Zusatzstoff 14 Gew.-% des Masterbatches, welcher den roten Phosphor enthält und 8 Gew.-% des Masterbatches, welcher ein oder mehrere Färbemittel enthält, umfasst.

5. Ein Material gemäss einem der vorhergehenden Patentansprüche, **dadurch gekennzeichnet, dass** das Kunststoffmaterial im Wesentlichen aus Hochdruckpolyethylen besteht.

6. Ein Material gemäss einem der vorhergehenden Patentansprüche 1 bis 4, **dadurch gekennzeichnet, dass** das Kunststoffmaterial im Wesentlichen aus Polypropylen besteht.

## Revendications

1. Une matière plastique colorée ayant des propriétés ignifuges, **caractérisée en ce que** ladite matière plastique renferme un additif comprenant (a) un mélange maître contenant du phosphore rouge et (b) un mélange maître contenant un ou plusieurs agents colorants, et en ce que ladite matière plastique se compose essentiellement de une ou plusieurs oléfines choisies dans le groupe constitué par le polyéthylène haute densité et le polypropylène.

2. Une matière selon la revendication 1, **caractérisée en ce que** l'additif comprend de 1 à 20% en poids du mélange maître contenant du phosphore rouge et de 0,5 à 20% en poids du mélange maître contenant un ou plusieurs agents colorants.

3. Une matière selon la revendication 1, **caractérisée en ce que** l'additif comprend de 8 à 24% en poids du mélange maître contenant du phosphore rouge et de 1 à 12% en poids du mélange maître contenant un ou plusieurs agents colorants.

4. Une matière selon la revendication 1, 2 ou 3, **caractérisée en ce que** l'additif comprend 14% en poids du mélange maître contenant du phosphore rouge et 8% en poids du mélange maître contenant un ou plusieurs agents colorants.

5. Une matière selon l'une quelconque des revendications précédentes, **caractérisée en ce que** la matière plastique se compose essentiellement de polyéthylène haute densité (PE HD).

6. Une matière selon l'une quelconque des revendications 1 à 4, **caractérisée en ce que** la matière plastique se compose essentiellement de polypropylène.
